(19) **Europäisches Patentamt**
**European Patent Office**
**Office européen des brevets**

(11) **EP 2 311 209 B1**

(12) **FASCICULE DE BREVET EUROPEEN**

(45) Date de publication et mention de la délivrance du brevet:
**04.09.2013 Bulletin 2013/36**

(21) Numéro de dépôt: **09772510.5**

(22) Date de dépôt: **02.07.2009**

(51) Int Cl.:
*H04J 3/06* (2006.01)   *H04J 3/07* (2006.01)

(86) Numéro de dépôt international:
**PCT/EP2009/058344**

(87) Numéro de publication internationale:
**WO 2010/000810 (07.01.2010 Gazette 2010/01)**

(54) **DISPOSITIF DE GÉNÉRATION DE FLUX, PROCÉDÉ DE CALCUL D'UN NIVEAU DE REMPLISSAGE D'UN TAMPON D'ENTRÉE AU SEIN DU DISPOSITIF ET PROCÉDÉ DE RÉGULATION DE FLUX**

STREAM-ERZEUGUNGSEINRICHTUNG, VERFAHREN ZUM BERECHNEN DES EINGANGSPUFFER-STOPFNIVEAUS IN DER EINRICHTUNG UND STREAM-STEUERVERFAHREN

STREAM GENERATING DEVICE, METHOD FOR CALCULATING INPUT BUFFER PADDING LEVEL INSIDE THE DEVICE, AND STREAM CONTROL METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **03.07.2008 FR 0854516**

(43) Date de publication de la demande:
**20.04.2011 Bulletin 2011/16**

(73) Titulaire: **Enensys Technologies**
**35700 Rennes (FR)**

(72) Inventeur: **MARTIN, Gaël**
**F-35700 Rennes (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
**US-A1- 2002 154 640**

Printed by Jouve, 75001 PARIS (FR)

**Description**

La présente invention concerne un procédé de calcul d'un niveau filtré de remplissage du tampon d'entrée d'une passerelle générant un flux de données à partir d'un flux de données reçu résistant à la gigue du flux reçu. Elle s'applique plus particulièrement à une passerelle recevant un flux de transport MPEG (*Moving Picture Experts Group* en anglais) reçu selon le protocole IP *(Internet Protocol* en anglais) et retransmis selon sur une interface ASI *(Asynchronous Serial Interface* en anglais).

Au sein des studios, les équipements professionnels échangent traditionnellement les flux de données de télévision numérique sous la forme de flux de transport MPEG via des interfaces série asynchrones ASI. L'importance prise ces dernières années par les réseaux de transmission de données de la famille IP et le bescin de transmettre ces flux de télévision numérique sur de longues distances ou à destination de multiples équipements crée le besoin de transférer les flux entre ces deux mondes. On a donc vu apparaître des passerelles permettant le transfert de flux entre le monde ASI et le monde IP.

La transmission d'un flux via une interface ASI se caractérise par un débit et une cadence de transmission des données maîtrisés. L'inconvénient réside dans une faible distance et la limitation des possibilités de routage du flux. À l'inverse, la transmission d'un flux sur un réseau IP permet d'atteindre de grandes distances et de réaliser des routages de diffusion de manière très souple. L'inconvénient est que le débit n'est pas garanti et que le transfert des paquets de données peut subir des pertes, des duplications, la transmission du flux est sujette à l'introduction de gigue.

Ces caractéristiques ne sont pas gênantes pour une passerelle ASI vers IP. Dans ce cas, on reçoit un flux de données bien cadencé et à débit constant que l'on utilise pour générer un flux de paquets IP régulier et également bien cadencé qui est émis sur le réseau IP. Par contre, la conception de passerelles IP vers ASI nécessite de gérer les problèmes de débit, de cadence, de perte et de gigue pouvant affecter le flux après sa transmission par un réseau IP pour générer en sortie un flux ASI qui doit être à débit constant et d'une cadence maîtrisée.

Les problèmes de perte potentielle, de duplication et d'inversion de paquets étant supposés résolus, les méthodes connues de régulation du débit du flux ASI généré sont affectées par la gigue introduite par le réseau IP.

Ce procédé permet une régulation fiable du débit de sortie du flux ASI généré malgré la gigue du flux reçu. De plus, ce procédé est peu gourmand en temps et en ressource de calcul. Il peut donc être introduit à faible coût dans la passerelle IP vers ASI. Bien que développée dans le cadre d'une passerelle pour des flux MPEG entre le monde IP et le monde ASI, l'invention peut s'appliquer dans toute passerelle devant générer un flux à débit constant à partir d'un flux reçu sous forme de paquets de données subissant une gigue.

L'invention concerne un dispositif de génération d'un flux de données de sortie à partir d'un flux de données d'entrée, les données du flux d'entrée étant reçues sous la forme de paquets de données, ces paquets de données étant stockés à leur réception dans un tampon d'entrée, le flux de sortie étant généré par consommation des données stockées dans le tampon d'entrée, les moments de réception des paquets de données du flux d'entrée étant affectés d'une gigue, comprenant des moyens de calcul d'un niveau filtré de remplissage du tampon d'entrée qui comprennent :

- des moyens de définir une période d'analyse dont la durée est supérieure à la gigue maximum affectant le flux d'entrée ;
- des moyens de calcul du niveau filtré de remplissage du tampon d'entrée comme étant le maximum du niveau de remplissage instantané sur la période d'analyse précédant le moment du calcul.

L'invention concerne également un procédé de calcul d'un niveau filtré de remplissage d'un tampon d'entrée au sein d'un dispositif de génération d'un flux de données de sortie à partir d'un flux de données d'entrée, les données du flux d'entrée étant reçues sous la forme de paquets de données, ces paquets de données étant stockés à leur réception dans un tampon d'entrée, le flux de sortie étant généré par consommation des données stockées dans le tampon d'entrée, les moments de réception des paquets de données du flux d'entrée étant affectés d'une gigue, comprenant une étape de définition d'une période d'analyse dont la durée est supérieure à la gigue maximum affectant le flux d'entrée ; une étape de calcul du niveau filtré de remplissage du tampon d'entrée comme étant le maximum du niveau de remplissage instantané sur la période d'analyse précédant le moment du calcul.

Selon un mode particulier de réalisation de l'invention, le niveau de remplissage instantané est obtenu par une étape de calcul du niveau de remplissage instantané d'un tampon d'entrée virtuel, le calcul étant fait lors de l'arrivée de chaque paquet de données, par ajout de la quantité de données reçues et soustraction de la quantité de données théoriquement consommée depuis l'étape de calcul précédente.

Selon un mode particulier de réalisation de l'invention, le procédé comporte en outre une étape de mémorisation du moment associé au maximum retenu comme valeur du niveau filtré de remplissage du tampon d'entrée.

L'invention concerne également un procédé de régulation du débit utile du flux généré par un dispositif tel que décrit précédemment, dans lequel la régulation est faite par asservissement sur une valeur cible prédéfinie du niveau filtré de remplissage du tampon d'entrée calculé tel que décrit précédemment.

L'invention concerne également un procédé de calcul de la dérive de l'horloge interne d'un dispositif tel que décrit précédemment comportant une étape d'estimation de la pente de la courbe du niveau filtré de remplissage calculé tel que décrit précédemment.

L'invention concerne également un procédé de calcul de la gigue du flux reçu par un dispositif tel que décrit précédemment comportant une étape de calcul du minimum du niveau filtré de remplissage du tampon d'entrée du dispositif sur la période d'analyse, la valeur de la gigue étant obtenue par division de la différence entre le maximum et le minimum par le débit du flux.

L'état de la technique US 2002/154640 divulgue un dispositif et un procédé de minimisation de gigue à l'aide d'une mémoire tampon.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 illustre un exemple d'architecture de diffusion de flux utilisant une passerelle selon l'invention,
La Fig. 2 illustre le phénomène de gigue,
La Fig. 3 illustre un exemple de réalisation d'une passerelle selon l'invention,
La Fig. 4 illustre l'évolution du niveau du tampon d'entrée en l'absence de gigue,
La Fig. 5 illustre l'évolution du niveau du tampon d'entrée en présence de gigue,
La Fig. 6 illustre l'évolution du niveau du tampon d'entrée en présence de gigue sur une période selon l'invention.

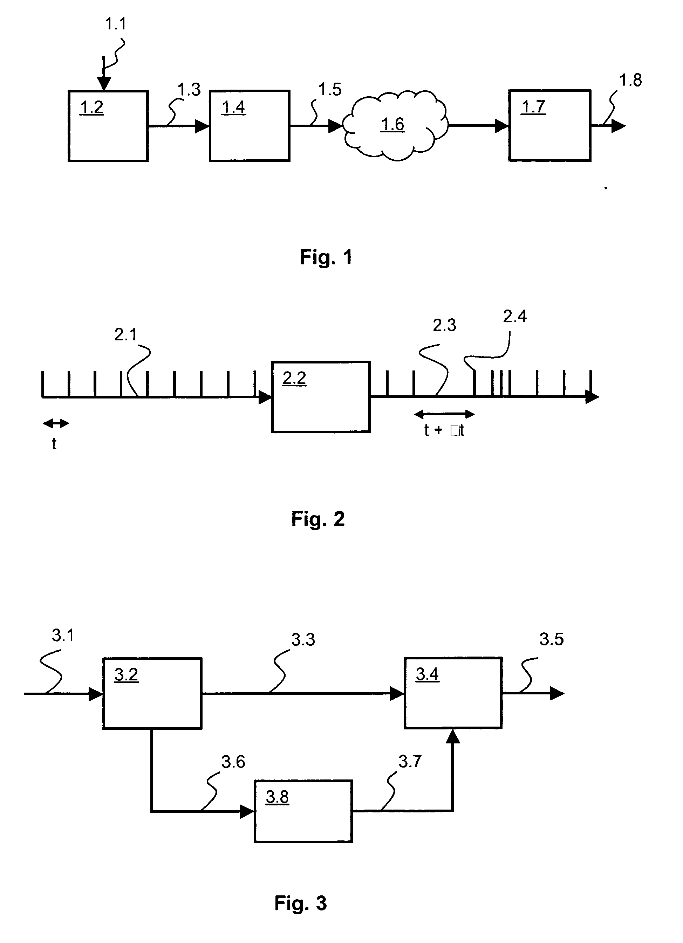

La Fig. 1 illustre un exemple d'architecture de diffusion de flux utilisant une passerelle selon l'invention. Dans cet exemple, on voit une source 1.2 qui génère un flux de données ASI 1.3. Cette source reçoit un signal d'horloge de référence pour la génération du flux, par exemple l'horloge de 10 MHz émise par le système GPS. Le débit utile du flux émis est constant. On définit le débit utile par le débit de paquets de données MPEG dans le flux. Le flux de données ASI 1.3 est ensuite transféré sur le réseau IP 1.6 par la passerelle ASI vers IP 1.4. Cette passerelle génère un flux 1.5 de paquets IP contenant de 1 à 7 paquets de données MPEG TS *(Transport Stream* en anglais). Les paquets IP sont émis en respectant la cadence du flux ASI reçu. Arrivé à destination, le flux IP est alors transformé à nouveau sous la forme d'un flux ASI 1.8 par la passerelle IP ASI 1.7.

Le réseau IP 1.6 génère un ensemble de perturbations sur les données transportées. D'une part, le réseau peut être à l'origine de perte de paquets, de duplication ou encore d'inversion de paquets. Ces perturbations sont ignorées, car leur solution est bien connue. Il est possible, lorsque l'on contrôle le réseau IP comme c'est le cas lorsqu'il est utilisé au sein d'un studio par exemple, de dimensionner ce réseau de façon à être certain que ces perturbations ne vont pas se produire. En effet, elles se produisent lorsque certains noeuds de routage saturent entre la source et la destination. Dans ce cas, des paquets peuvent être perdus ou la saturation peut entraîner des décisions de routage différentes pour les paquets qui conduisent à des temps de transport différents et donc à de possibles inversions dans l'ordre des paquets transmis. Dans un contexte limité où l'on maîtrise le réseau, un dimensionnement généreux des noeuds de routage et des liaisons permet d'éviter ces problèmes. Lorsque l'on est pas dans ce cas, l'utilisation de protocoles de contrôle tels que RTP permet de corriger les duplications et les inversions de paquets. On peut également protéger les paquets à l'aide de correcteurs d'erreurs, par exemple un code FEC *(Forward Error Correction* en anglais) qui ajoute de la redondance permettant la reconstruction d'éventuels paquets perdus. L'utilisation de ces mécanismes permet de se ramener dans l'hypothèse d'un flux sans perte, duplication ou inversion de paquets.

D'autre part, un retard est dû au temps de traversée du réseau par les paquets. On peut modéliser ce retard comme étant l'addition d'un temps de propagation fixe, identique pour tous les paquets, et d'un facteur de gigue consistant en un retard aléatoire affectant chaque paquet indépendamment. Ceci est illustré par la Fig. 2. On y voit un flux régulier 2.1 contenant des paquets de données émis à intervalle de temps t. Ce flux est alors transmis par un réseau 2.2 introduisant de la gigue. On voit que le paquet de données 2.4 qui aurait du être transmis à un temps $t$ après le paquet précédent est en fait transmis à un temps $t + \Delta t$. Ici $\Delta t$ représente la gigue affectant le paquet 2.4.

Le retard du au temps de propagation fixe, du moins tant qu'il reste raisonnable, ne pose généralement pas de problème. Il s'analyse en un temps de latence. Par exemple, dans un réseau de diffusion SFN (*Single Frequency Network* en anglais), tant que la latence totale de la chaîne n'excède pas une seconde, elle n'affecte pas les mécanismes de synchronisation entre émetteurs et n'entraîne aucune conséquence menaçant le fonctionnement du système.

Nous allons voir qu'il n'en est pas de même pour le phénomène de gigue, en particulier pour les mécanismes de régulation du débit utile du flux généré.

La Fig. 3 illustre le fonctionnement de la passerelle IP ASI. Elle reçoit en entrée le flux 3.1 qui est lu dans un tampon d'entrée 3.2. Ce flux d'entrée est reçu sous la forme de paquets de données qui sont stockés à leur réception dans le tampon. Ce tampon est lu, octet par octet 3.3, par le module 3.4 de génération du flux ASI de sortie 3.5. Le niveau de remplissage du tampon d'entrée 3.2 est contrôlé et des informations de contrôle 3.6 sont transmises à un module de régulation 3.8. Ce module génère des paramètres de régulation 3.7 à destination du module 3.4 de génération du flux de sortie.

Le débit utile du flux de sortie est défini de la façon suivante. Le signal ASI est un signal série émis selon une horloge bit de 270 MHz. Les données sont transmises par paquets de 8 bits selon un codage 8 bits vers 10 bits à l'aide d'un alphabet de codage pour fiabiliser la transmission. On obtient donc un débit de données de 216 Mbits/s.

Des mots de synchronisation sont régulièrement insérés entre les paquets TS transmis. On parle de mots de synchronisation *inter packet* pour inter paquets. Des mots de synchronisation sont également insérés entre les octets au sein d'un paquet TS. On parle alors de mots de synchronisation *inter byte* pour inter octets. Ces mots de synchronisation s'interprètent comme des données de bourrage permettant l'ajustement du débit utile du flux en fonction d'un débit total de 216 Mbits/s comme nous l'avons vu.

On suppose que le débit du flux d'entrée définissant le débit utile théorique du flux généré est connu. Il est généralement obtenu par des informations de signalisation SFN ou encore mesuré au cours d'une étape d'estimation initiale du débit. Un procédé d'estimation du débit utilisant l'invention est décrit plus loin.

Le flux généré en sortie de la passerelle utilise une horloge pour cadencer l'insertion des données utiles sur le lien ASI. Cette horloge est générée par un oscillateur contrôlable par exemple un NCO *(Numerical Controlled Oscillator* en anglais). Un VCO *(Voltage Control Oscillator* en anglais) peut également être utilisé, à partir d'une horloge interne et d'une valeur d'ajustement d'horloge appelée *nco.* Selon ce procédé, le débit utile est alors défini par la formule :

$$Débit = K / nco \; ;$$

où K est une constante proportionnelle à la fréquence de l'oscillateur interne.

L'horloge interne de la passerelle servant de référence n'est jamais parfaite et subit donc une dérive dans le temps. Cette dérive est également affectée par des conditions d'utilisation telles que la température ambiante, le vieillissement du composant et autres. Le maintien du débit utile du flux généré nécessite donc un mécanisme de régulation qui peut être fait par exemple par un asservissement sur le débit d'entrée du flux comme le mécanisme connu sous le nom de mécanisme d'asservissement PID (Proportionnel, Intégral et Dérivé).

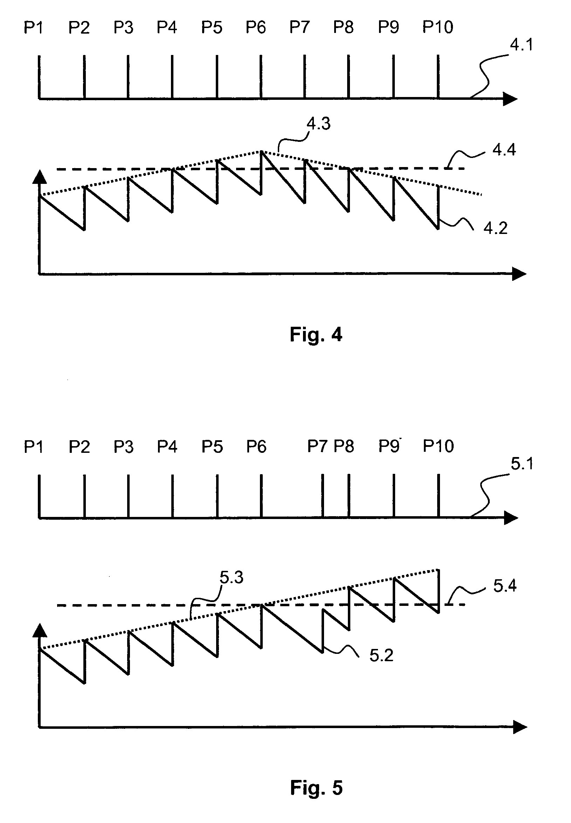

Cet asservissement PID est effectué en fonction du niveau de remplissage instantané du tampon d'entrée. Ce niveau de remplissage du tampon d'entrée évolue en dent de scie comme illustré Fig. 4. Sur cette figure, la partie haute 4.1 représente les moments de réception d'un paquet IP dans le temps. La partie basse 4.2 représente l'évolution du niveau de remplissage du tampon. Lorsqu'un paquet IP est reçu, il contient un certain nombre d'octets correspondant à un nombre de un à sept paquets TS, chacun contenant 188 octets. Ces données sont écrites dans le tampon, ce qui est représenté par les traits verticaux de la courbe 4.2. Entre les moments de réception d'un paquet IP, les octets sont consommés régulièrement par le module de génération du flux en fonction du débit présenté plus haut. Ce mécanisme est représenté par la diminution oblique de la courbe 4.2. On définit la mesure du niveau instantané 4.3 du tampon par la mesure du niveau juste après l'écriture d'un paquet IP. Ce niveau dit instantané correspond donc au niveau en sommet de dent de scie. L'asservissement peut alors se faire en fixant un niveau cible 4.4 et en modifiant la valeur d'ajustement de l'horloge *nco* en fonction du niveau de remplissage instantané par rapport à ce niveau cible. Quand le niveau de remplissage instantané est supérieur au niveau cible, on diminue la valeur de *nco* ce qui a pour effet d'augmenter le débit utile du flux généré et donc le vidage du tampon. Quand le niveau de remplissage instantané est inférieur au niveau cible, on augmente la valeur de *nco* ce qui a pour effet de diminuer le débit utile du flux généré et donc le remplissage du tampon. On applique donc à la valeur de *nco* une correction proportionnelle à l'erreur entre le niveau effectif et le niveau cible de remplissage du tampon. On arrive ainsi à maintenir le niveau effectif de remplissage du tampon sensiblement au niveau cible et on obtient ainsi un asservissement du débit utile du flux généré sur le débit du flux reçu.

Ce mécanisme fonctionne bien en l'absence de gigue comme illustré Fig. 4. L'introduction de gigue dans le moment d'arrivée des paquets IP influence le niveau de remplissage du tampon d'entrée comme illustré Fig. 5. Sur cette figure, le paquet P7 arrive en retard et subit donc une gigue. On voit sur la figure que la conséquence est que la phase de vidage du tampon après la réception du paquet P6 se poursuit donc plus longtemps, le niveau du tampon après la réception du paquet P7 est donc inférieur à ce qu'il aurait été si le paquet avait été reçu à temps. On voit sur la figure que ce niveau se retrouve en dessous du niveau cible 5.4 quand il aurait du se trouver au-dessus. Une prise de décision de correction de débit à ce moment va donc être faussée et tendra à diminuer le débit utile du flux alors que le niveau de remplissage du tampon tend à augmenter, ce qui accentue la dérive.

Une solution possible à ce problème consiste à effectuer l'asservissement non plus sur le niveau instantané de remplissage du tampon, mais sur une moyenne exponentielle de ce niveau. Cette moyenne exponentielle $V_i$ est alors calculée au moment de réception d'un paquet IP *i* comme :

$$V_i = a.v_i + (1-a).v_{i-1} \; ;$$

où $v_i$ représente le niveau de remplissage instantané du tampon après la réception du paquet IP *i* et *a* un paramètre dont la valeur est à prendre entre 0 inclus et 1 exclu. On peut noter que la valeur *a = 1* correspondrait au niveau instantané.

7      EP 2 311 209 B1      8

On constate que si la valeur *a* utilisée est faible, c'est-à-dire proche de 0 on introduit une erreur faible sur le calcul du niveau de remplissage du tampon, mais on met longtemps à converger vers la valeur correspondant à une réception sans gigue. Inversement, si *a* est proche de 1, on introduit une erreur forte, mais on converge plus vite. On voit que la gigue introduit une forte déviation de la moyenne exponentielle qui nécessite d'utiliser de faibles valeurs de *a* et donc on obtient un temps d'asservissement long et une grande amplitude d'asservissement. Le temps de convergence long introduit également un déphasage important.

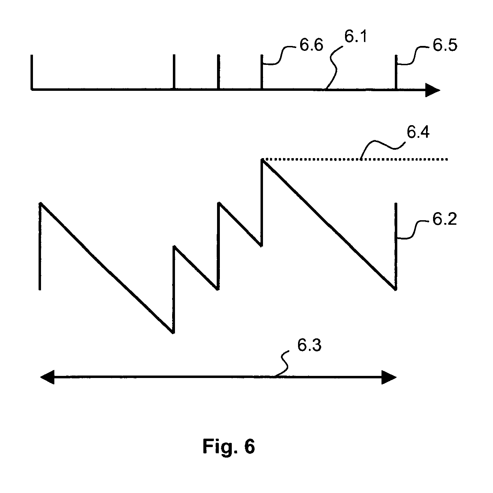

Une autre solution à ce problème consiste à définir une période de temps appelée période d'analyse d'une durée supérieure à la gigue maximum du flux reçu et à prendre comme valeur du niveau de remplissage du tampon, appelé ici niveau de remplissage filtré, le maximum de ce niveau pendant la période d'analyse précédant le moment du calcul. La Fig. 6 illustre cette solution. On retrouve la courbe 6.1 indiquant les moments de réception des paquets et la courbe 6.2 du niveau de remplissage du tampon d'entrée. La courbe est dessinée pendant une période de temps 6.3 qui correspond à la période d'analyse définie comme supérieure à la gigue maximum du flux reçu. Au temps correspondant au moment de réception du paquet 6.5, la valeur filtrée de remplissage du tampon, utilisée pour la régulation de débit, est donc définie comme le maximum du niveau de remplissage pendant la période d'analyse 6.3 soit le niveau 6.4. Cette valeur peut être calculée en fin de période d'analyse ou plus fréquemment à chaque réception de paquets en utilisant une période d'analyse glissante. On voit que la valeur filtrée 6.4 est donc la valeur retenue pour le calcul du niveau filtré de remplissage du tampon tel que calculé au moment de la réception du paquet 6.5. Or cette valeur correspond dans la réalité au moment d'arrivée du paquet 6.6. Cette méthode entraîne donc un léger décalage dans le temps, car on affecte au moment de la fin de la période d'analyse une valeur qui correspond dans la réalité à un moment en cours de la période. Avantageusement, il est possible de mémoriser en sus de cette valeur maximum du niveau de remplissage du tampon au cours de la période le moment correspondant de manière à pouvoir utiliser ce moment au lieu du moment de calcul dans certaines applications de cette méthode de calcul.

Cette méthode permet de gommer les irrégularités de la courbe de niveau de remplissage du tampon d'entrée introduites par la gigue du flux reçu. Elle possède également l'avantage d'être très simple à implémenter et de ne pas nécessiter beaucoup de ressources. Cette méthode permet donc d'effectuer la régulation de débit utile du flux sortant en régime continu. On peut aussi l'utiliser pour estimer la dérive de l'horloge. Dans ce cas, la variable d'ajustement d'horloge n'est pas modifiée et on mesure l'évolution du niveau de remplissage filtré du tampon par la méthode du maximum décrite plus haut. On peut alors utiliser une régression linéaire, par exemple la méthode des moindres carrés, pour estimer la pente de la courbe d'évolution du niveau de remplissage du tampon et en déduire la dérive de l'horloge. Avantageusement, ce procédé d'estimation de la pente de la courbe du niveau de remplissage du tampon utilise la mémorisation du moment associé au niveau filtré de remplissage retenu. Les points alors retenus sont réellement sur la courbe dont on cherche à estimer la pente au contraire des points retenus en associant le maximum sur la période au moment de la fin de la période.

Une mesure supplémentaire du niveau minimum de remplissage du tampon sur la période permet de mesurer précisément la gigue du flux reçu. En effet, cette gigue correspond à la différence entre le maximum et le minimum divisé par le débit.

L'invention peut également être avantageusement utilisée pour calculer le débit du flux entrant. Dans ce cas, indépendamment de la génération du flux sortant, on calcule une première valeur approchée du débit du flux entrant. On fixe alors la consommation des données du tampon d'entrée en fonction de cette valeur approchée. Il n'est pas nécessaire de générer effectivement le flux de sortie dans ce cas. On fait alors une estimation de la pente de la courbe du niveau de remplissage du tampon selon l'invention. Cette courbe subit une dérive selon une pente qui dépend de l'erreur entre le débit réel du flux d'entrée et la valeur approchée utilisée pour la consommation du tampon. On affine alors cette valeur pour calculer le débit précis du flux d'entrée. Avantageusement, la génération du flux de sortie n'étant pas nécessaire à ce calcul, on peut utiliser un tampon d'entrée virtuel en lieu et place du tampon réel. Dans ce cas, on maintient par calcul le niveau de remplissage instantané qu'aurait le tampon réel d'entrée. Il suffit, lors de l'arrivée de chaque paquet de données, de mettre à jour cette valeur par une étape de calcul consistant en une mise à jour du niveau instantané de remplissage du tampon virtuel en lui ajoutant la quantité de données reçue et en soustrayant la quantité de données consommée dans l'intervalle de temps depuis la dernière étape de calcul. On obtient ainsi un niveau de remplissage instantané du tampon pouvant être utilisé dans l'invention pour le calcul du niveau filtré de remplissage du tampon.

L'invention peut être utilisée dans tout type de dispositif implémentant une régulation de débit entre un flux entrant et un flux sortant dans la mesure où ces flux sont en mode CBR (*constant Bit Rate* en anglais), c'est-à-dire à débit constant. Elle ne se limite donc pas au domaine du transport de vidéo MPEG mais peut s'appliquer à tout flux de données à débit constant, vidéo, audio, voix sur IP. Elle peut également être utilisée dans le cadre de la régulation de noeuds de routage génériques quelque soit le protocole de transport utilisé comme ATM ou autres.

5

## Revendications

1. Dispositif de génération d'un flux de données de sortie (3.5) à partir d'un flux de données d'entrés (3.1) comportant :

   - des moyens de recevoir les données du flux d'entrée sous la forme de paquets de données (2.4),
   - un tampon d'entréel (3.2) pour stocker ces paquets de données à leur réception,
   - des moyens de générer le flux de sortie par consommation des données stockées dans le tampon d'entrée,

   les moments de réception des paquets de données du flux d'entrée étant affectés d'une gigue, **caractérisé en ce qu'**il comprend des moyens de calcul d'un niveau filtré de remplissage du tampon d'entréé (6.4) comprenant :

   - des moyens, de définir une période d'analyse (6.3) dont la durée est supérieure à la gigue maximum affectant le flux d'entrée ;
   - des moyens de calcul du niveau filtré de remplissage du tampon d'entrée comme étant le maximum du niveau de remplissage instantané sur la période d'analyse précédant le moment du calcul.

2. Procédé de calcul d'un niveau filtré de remplissage d'un tampon d'entré (6.4) au sein d'un dispositif de génération d'un flux de données de sortie (3.5) à partir d'un flux de données d'entré (3.1), les données du flux d'entrée étant reçues sous la forme de paquets de données (2.4), ces paquets de données étant stockés à leur réception dans un tampon d'entrée (3.2), le flux de sortie étant généré par consommation des données stockées dans le tampon d'entrée, les moments de réception des paquets de données du flux d'entrée étant affectés d'une gigue, le procédé étant **caractérisé en ce qu'**il comprend les étapes suivantes :

   - une étape de définition d'une période d'analyse (6.3) dont la durée est supérieure à la gigue maximum affectant le flux d'entrée ;
   - une étape de calcul du niveau filtré de remplissage du tampon d'entrée comme étant le maximum du niveau de remplissage instantané sur la période d'analyse précédant le moment du calcul.

3. Procédé selon la revendication 2, **caractérisé en ce que** le niveau de remplissage instantané est obtenu par une étape de calcul du niveau de remplissage instantané d'un tampon d'entrée virtuel, le calcul étant fait lors de l'arrivée de chaque paquet de données, par ajout de la quantité de données reçues et soustraction de la quantité de données théoriquement consommée depuis l'étape de calcul précédente.

4. Procédé selon l'une des revendications 2 ou 3, **caractérisé en ce qu'**il comporte en outre une étape de mémorisation du moment associé au maximum retenu comme valeur du niveau filtré de remplissage du tampon d'entrée.

5. Procédé de régulation du débit utile du flux généré par un dispositif selon la revendication 1, **caractérisé en ce que** la régulation est faite par asservissement sur une valeur cible prédéfinie du niveau filtré de remplissage du tampon d'entrée calculé selon l'une des revendications 2 à 4.

6. Procédé de calcul de la dérive de l'horloge interne d'un dispositif selon la revendication 1, **caractérisé en ce que** le procédé comporte une étape d'estimation de la pente de la courbe du niveau filtré de remplissage calculé selon l'une des revendications 2 à 4.

7. Procédé de calcul de la gigue du flux reçu par un dispositif selon la revendication 1, comportant le calcul d'un premier niveau filtré de remplissage du tampon d'entrée selon l'une des revendications 2 à 4, **caractérisé en ce que** le procédé comporte en outre

   - une étape de calcul d'un second niveau filtré de remplissage du tampon d'entrée comme étant le minimum du niveau de remplissage instantané sur la période d'analyse précédant le moment du calcul ;
   - une étape de calcul de la valeur de la gigue obtenue par division de la différence entre les premier et second niveaux filtrés par le débit du flux.

## Patentansprüche

1. Vorrichtung zum Erzeugen eines Ausgangsdatenstroms (3.5) aus einem Eingangsdatenstrom (3.1), aufweisend:

   - Mittel zum Empfangen der Daten des Eingangsstroms in Form von Datenpaketen (2.4),
   - einen Eingangspuffer (3.2) zum Speichern dieser Datenpakete bei ihrem Empfang,
   - Mittel zum Erzeugen des Ausgangsstroms durch Verbrauch der im Eingangspuffer gespeicherten Daten,
   wobei die Empfangsmomente der Datenpakete des Eingangsstroms von einem Jitter beeinflusst werden, **dadurch gekennzeichnet, dass** sie Mittel zum Berechnen eines gefilterten Belegungsstands des Eingangspuffers (6.4) aufweist, welche enthalten:
- Mittel zum Definieren einer Analyseperiode (6.3), deren Dauer länger als der maximale Jitter ist, der den Eingangsstrom beeinflusst;
- Mittel zum Berechnen des gefilterten Belegungsstands des Eingangspuffers als der maximale momentane Belegungsstand in dem Analysezeitraum vor dem Moment der Berechnung.

2. Verfahren zum Berechnen eines gefilterten Belegungsstands eines Eingangspuffers (6.4) in der Vorrichtung zum Erzeugen eines Ausgangsdatenstroms (3.5) aus einem Eingangsdatenstrom (3.1), wobei die Daten des Eingangsstroms in Form von Datenpaketen (2.4) empfangen werden, wobei diese Datenpakete bei ihrem Empfang in einem Eingangspuffer (3.2) gespeichert werden, wobei der Ausgangsstrom durch Verbrauch der in dem Eingangspuffer (3.2) gespeicherten Daten erzeugt wird, wobei die Empfangsmomente der Datenpakete des Eingangsstroms von einem Jitter beeinflusst werden, wobei das Verfahren **dadurch gekennzeichnet ist, dass** es die folgenden Schritte aufweist:

- einen Schritt zum Definieren einer Analyseperiode (6.3), deren Dauer länger als der maximale Jitter ist, der den Eingangsstrom beeinflusst;
- einen Schritt zum Berechnen des gefilterten Belegungsstands des Eingangspuffers als der maximale momentane Belegungsstand in dem Analysezeitraum vor dem Moment der Berechnung.

3. Verfahren nach Anspruch 2, **dadurch gekennzeichnet, dass** der momentane Belegungsstand durch einen Schritt zum Berechnen des momentanen Belegungsstands eines virtuellen Eingangspuffers erhalten wird, wobei die Berechnung während der Ankunft jedes Datenpakets durch Hinzufügen der empfangenen Datenmenge und Subtraktion der Datenmenge erfolgt, die theoretisch seit dem vorherigen Berechnungsschritt verbraucht wurde.

4. Verfahren nach einem der Ansprüche 2 oder 3, **dadurch gekennzeichnet, dass** es des Weiteren einen Schritt zum Speichern des Moments, der dem zurückbehaltenen Maximum zugeordnet ist, als Wert des gefilterten Belegungsstands des Eingangspuffers aufweist.

5. Verfahren zur Steuerung einer Nutzdurchflussmenge eines Stroms, der durch eine Vorrichtung nach Anspruch 1 erzeugt wird, **dadurch gekennzeichnet, dass** die Steuerung durch Regelung eines vorab definierten Zielwerts für den gefilterten Belegungsstand des Eingangspuffers erfolgt, der nach einem der Ansprüche 2 bis 4 berechnet wird.

6. Verfahren zum Berechnen der Abweichung des Taktgebers einer Vorrichtung nach Anspruch 1, **dadurch gekennzeichnet, dass** das Verfahren einen Schritt zum Schätzen der Steigung der Kurve des gefilterten Belegungsstands aufweist, der nach einem der Ansprüche 2 bis 4 berechnet wird.

7. Verfahren zum Berechnen des Jitters des Stroms, der von einer Vorrichtung nach Anspruch 1 empfangen wird, das die Berechnung eines ersten gefilterten Belegungsstands eines Eingangspuffers nach einem der Ansprüche 2 bis 4 aufweist, **dadurch gekennzeichnet, dass** das Verfahren des Weiteren aufweist

- einen Schritt zum Berechnen eines zweiten gefilterten Belegungsstands des Eingangspuffers als der minimale momentane Belegungsstand in dem Analysezeitraum vor dem Berechnungsmoment;
- einen Schritt zum Berechnen des Werts des Jitters, der durch Teilen der Differenz zwischen dem ersten und dem zweiten gefilterten Belegungsstand durch die Durchflussmenge des Stroms erhalten wird.

**Claims**

1. Device for generating an output data stream (3.5) from an input data stream (3.1), comprising:

- means for receiving the data of the input stream in the form of data packets (2.4),
- an input buffer (3.2) for storing the data packets upon receipt,
- means for generating the output stream by consumption of the data stored in the input buffer,

the times of receipt of the data packets of the input stream being affected by a jitter, **characterised in that** it comprises means for calculating a filtered fill level of the input buffer (6.4) comprising:

- means for defining an analysis period (6.3), the duration of which is greater than the maximum jitter affecting the input stream;
- means for calculating the filtered fill level of the input buffer as being the maximum of the instantaneous fill level over the analysis period preceding the time of the calculation.

2. Method for calculating a filtered fill level of an input buffer (6.4) within a device for generating an output data stream (3.5) from an input data stream (3.1), the data of the input data stream being received in the form of data packets (2.4), the data packets being stored upon receipt in an input buffer (3.2), the output stream being generated by consumption of the data stored in the input buffer, the times of receipt of the data packets of the input stream being affected by a jitter, the method being **characterised in that** it comprises the following steps:

- a step of defining an analysis period (6.3), the duration of which is greater than the maximum jitter affecting the input stream;
- a step of calculating the filtered fill level of the input buffer as being the maximum of the instantaneous fill level over the analysis period preceding the time of the calculation.

3. Method according to claim 2, **characterised in that** the instantaneous fill level is obtained by a step of calculating the instantaneous fill level of a virtual input buffer, the calculation being made on arrival of each data packet by adding the quantity of data received and subtracting the quantity of data theoretically consumed since the preceding calculation step.

4. Method according to either claim 2 or claim 3, **characterised in that** it further comprises a step of storing the time associated with the maximum retained as the value of the filtered fill level of the input buffer.

5. Method for regulating the useful bit rate of the stream generated by a device according to claim 1, **characterised in that** regulation is made by control of a predefined target value of the filtered fill level of the input buffer calculated according to any one of claims 2 to 4.

6. Method for calculating the drift of the internal clock of a device according to claim 1, **characterised in that** the method comprises a step of estimating the slope of the curve of the filtered fill level calculated according to any one of claims 2 to 4.

7. Method for calculating the jitter of the stream received by a device according to claim 1, comprising calculation of a first filtered fill level of the input buffer according to any one of claims 2 to 4, **characterised in that** the method further comprises

- a step of calculating a second filtered fill level of the input buffer as being the minimum of the instantaneous fill level over the analysis period preceding the time of the calculation;
- a step of calculating the value of the jitter obtained by dividing the difference between the first and second filtered levels by the bit rate of the stream.

**Fig. 1**

**Fig. 2**

**Fig. 3**

P1  P2  P3  P4  P5  P6  P7  P8  P9  P10

4.1

4.3

4.4

4.2

**Fig. 4**

P1  P2  P3  P4  P5  P6    P7 P8  P9  P10

5.1

5.3

5.4

5.2

**Fig. 5**

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002154640 A